# DEMANDE DE BREVET EUROPEEN

(11) **EP 0 576 364 A1**
(43) Date de publication de la demande: **29.12.1993**
(21) Numéro de dépôt: 93401630.4
(22) Date de dépôt: 24.06.1993
(51) Int. Cl.: H04M 3/54

(54) **Dispositif de renvoi d'appels téléphoniques universel**

(30) Priorité: 25.06.1992 FR 9207781
(71) Demandeur: FRANCE TELECOM, F-75015 Paris (FR)
(72) Inventeur: Grimault, Jean-Michel, F-94170 Le Perreux Sur Marne (FR)
(74) Mandataire: Armengaud Ainé, Alain

(57) **Abrégé**

Dispositif de renvoi d'appels téléphoniques universel comportant de 1 à n lignes PTT de raccordement (2.1 à 2.n), chaque ligne étant reliée à un circuit d'interface de ligne classique (5.1 à 5.n), chaque circuit d'interface de ligne étant relié à un circuit de détection de sonnerie d'appels téléphoniques (18.1 à 18.n) lui-même relié d'une part par une liaison basse fréquence (35.1 à 35.n) à un réseau de connexion (7) comportant au minimum n entrées et n sorties et d'autre part à un calculateur (20), ce réseau de connexion est également relié par une liaison basse-fréquence (8) à un circuit amplificateur basse-fréquence classique (9) et à une mémoire de stockage (15) des messages vocaux, les circuits d'interface analogique-numérique (5.1 à 5.n, 7, 9, 15 et 18.1 à 18.n) sont reliés à un bus de données (21) lui-même relié à un afficheur alphanumérique (24), à un clavier d'introduction de données (25) et au calculateur numérique (20), caractérisé par le fait qu'il comporte, relié audit bus de données, une mémoire non volatile (22) de stockage des différents numéros, dates, heures et durées des renvois d'appels pour chacune des n lignes (2.1 à 2.n), un émetteur de signaux multifréquences (16), un récepteur-détecteur de signaux multifréquences (17) et un circuit horodateur (27).

Application aux systèmes électroniques téléphoniques.

## Description

La présente invention se rapporte à un dispositif de renvoi d'appels téléphoniques universel en utilisant une ou plusieurs lignes téléphoniques.

Le système actuel de transfert d'appels proposé par les PTT permet le transfert de tous les appels téléphoniques arrivant sur sa propre ligne téléphonique. Toutefois, ce système présente l'inconvénient de devoir être programmé depuis son propre téléphone et surtout de devoir être annulé également depuis le téléphone se trouvant à son domicile. En outre, ce service, lorsqu'il est proposé, ne concerne que la France métropolitaine. Par ailleurs, le transfert en chaîne ou en cascade n'est pas proposé.

Les appareils existants qui offrent un service équivalent possèdent deux lignes téléphoniques afin d'effectuer les renvois d'appels arrivant sur une ligne vers un numéro de téléphone différent en utilisant la deuxième ligne en départ. Les inconvénients majeurs de ces produits sont le non filtrage des appels arrivés et l'impossibilité de déprogrammer ou de modifier un renvoi déjà programmé à distance, mais seulement lorsque l'on se trouve près du produit même.

La présente invention a pour objet un dispositif de renvoi d'appels téléphoniques universel en utilisant une ou plusieurs lignes téléphoniques.

Le dispositif de renvoi d'appels téléphoniques conforme à l'invention comporte, relié à une ou plusieurs paires de fils téléphoniques, un circuit d'interface de ligne par paire de fils téléphoniques avec son circuit d'alimentation en énergie, avantageusement par secteur électrique et à partir du courant de ligne, le circuit d'alimentation en énergie possédant son propre témoin de bon fonctionnement et chaque circuit d'interface de ligne étant relié à un circuit de détection de sonnerie d'appels téléphoniques possédant son propre témoin d'état de la ligne, le tout étant relié à un réseau de connexion lui-même relié à un circuit de synthèse vocale, à un circuit d'analyse, codage et compression de la voix, à un circuit basse fréquence, à un détecteur de signaux multifréquences et à un émetteur de signaux multifréquences, les circuits d'interface de ligne, le circuit de synthèse vocale, le circuit codeur de la voix, le circuit basse fréquence, le détecteur de signaux multifréquences et l'émetteur de signaux multifréquences étant d'autre part reliés à un bus de données qui est relié à un microprocesseur, à un afficheur, à un clavier d'introduction de données, à une mémoire d'annonces, à une mémoire de messages vocaux, à un circuit d'interfaçage avec ou sans fil pour un boîtier de télécommande extérieure et à une embase de connecteur permettant de relier une imprimante extérieure, le microprocesseur étant relié à une mémoire vive non volatile permettant d'enregistrer les différentes données permettant les renvois d'appels téléphoniques, le circuit basse fréquence étant relié à un microphone, à un écouteur et à un combiné téléphonique.

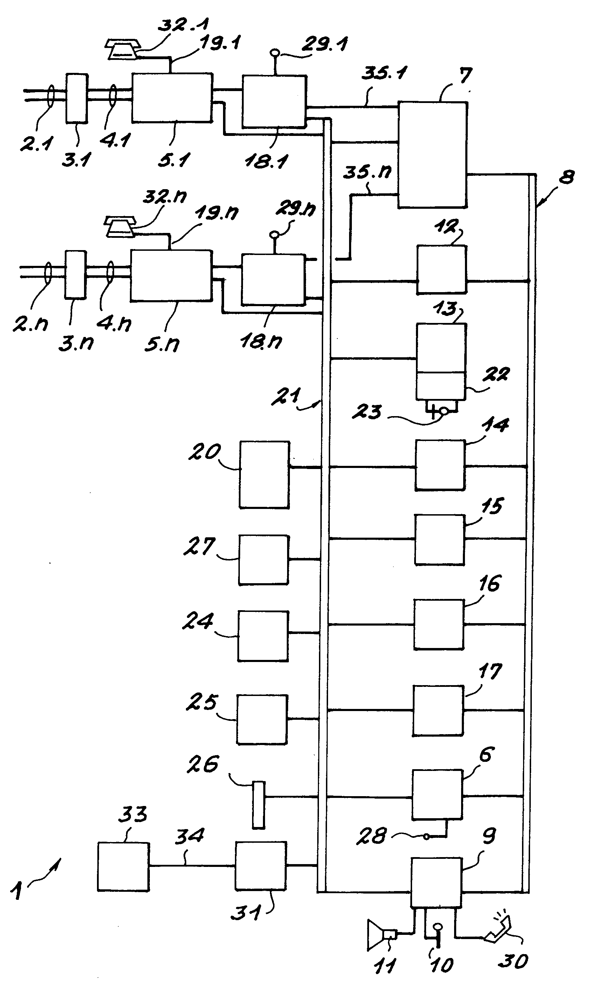

La présente invention sera mieux comprise à la lecture de la description détaillée d'un mode de réalisation pris comme exemple non limitatif et illustré par le dessin annexé dont la figure unique est un bloc-diagramme de ce mode de réalisation.
Le dispositif de renvoi d'appels téléphoniques universel 1 dont le schéma synoptique est représenté sur le dessin comporte n lignes PTT de raccordement référencées 2.1 à 2.n reliées à un réseau téléphonique par n prises référencées 3.1 à 3.n. Chaque prise 3.1 à 3.n est reliée par une paire de fils téléphoniques 4.1 à 4.n à un circuit 5.1 à 5.n d'interface de ligne classique. Chaque circuit 5.1 à 5.n comporte une interface analogique-numérique (non représentée) et l'ensemble de ces n circuits 5.1 à 5.n permet, de façon avantageuse au travers d'un circuit 6 d'alimentation en énergie de l'ensemble du dispositif de renvoi d'appels téléphoniques universel, l'alimentation en énergie à partir d'un réseau de distribution électrique et à partir du courant de ligne. Un témoin 28 de bon fonctionnement du dispositif est relié au circuit 6 d'alimentation en énergie.

Chaque circuit d'interface 5.1 à 5.n est relié à un circuit de détection de sonnerie d'appels téléphoniques 18.1 à 18.n, lui-même relié d'une part par une liaison basse fréquence 35.1 à 35.n à un réseau de connexion 7 comportant au minimum n entrées et n sorties et d'autre part au calculateur 20. Chaque circuit de détection de sonnerie 18.1 à 18.n est relié à un témoin 29.1 à 29.n d'état d'occupation de chaque ligne 2.1 à 2.n. Le réseau de connexion 7 est également relié par une liaison basse-fréquence 8 d'une part à un circuit amplificateur basse-fréquence classique 9 relié à un microphone 10, à un haut-parleur 11 et à un combiné téléphonique 30, et d'autre part à un circuit de synthèse vocale 12, à un circuit de compression et d'analyse de la voix 14 et à une mémoire de stockage 15 des messages vocaux ainsi compressés.

Le circuit 7 est d'autre part relié à la sortie d'un émetteur de signaux multifréquences 16 (type avis Q23 du CCITT) et à l'entrée d'un récepteur-détecteur de signaux multifréquences 17.

De 1 à n postes téléphoniques externes 32.1 à 32.n peuvent être en outre reliés aux n circuits d'interface de ligne 5.1 à 5.n par l'intermédiaire de n paires de fils de raccordement 19.1 à 19.n.

Les entrées et/ou sorties numériques des interfaces analogique-numérique 5.1 à 5.n, 7, 9, 12, 14, 15, 16, 17 et 18.1 à 18.n sont reliées à un bus de données 21 lui-même relié à un calculateur numérique 20 constituant l'organe central et intelligent du dispositif de renvoi 1. Le calculateur 20 est par exemple un microprocesseur possédant une mémoire programme comportant un programme de gestion du dispositif de renvoi d'appels téléphoniques universel approprié. Le calculateur 20 est en outre relié à une mémoire vive 13 dont au moins une partie 22 est du type non volatile, par exemple en technologie CMOS, comportant les numéros, dates, heures et durées des renvois d'appels pour chacune des n lignes 2.1 à 2.n et alimentée par une batterie 23. Selon une variante, la mémoire 13 peut être entièrement non volatile du type EAROM ou FLASH.

Le bus de données 21 est en outre relié à un afficheur alphanumérique 24, à un clavier d'introduction de données 25, à une embase de connecteur 26 qui permet de relier une imprimante extérieure, à un circuit de liaison 31 avec un boîtier de télécommande 33 et à un circuit horodateur 27. L'afficheur 24, le clavier 25 et l'éventuelle imprimante extérieure sont gérés de façon classique par le calculateur 20. Le circuit horodateur 27 permet sous le contrôle du calculateur 20 de connaître le jour et l'heure courante. Une variante permet de synchroniser le circuit horodateur 27 par un élément extérieur (non représenté) comme par exemple des tops de synchronisation et de données de date et d'heure en provenance d'un émetteur de type MF (Modulation de Fréquence). Le circuit de liaison 31 permet de relier un boîtier 33 de télécommande extérieur et spécifique soit par une liaison filaire 34, soit par une liaison radio ou infrarouge. Ce boîtier 33 de télécommande extérieur est mis à jour soit en permanence par le dispositif 1 lorsque le boîtier de télécommande 33 est soit relié au dispositif 1 par la liaison filaire 34 ou par la liaison sans fil radio ou infrarouge, soit dès que la connexion 34 physique (filaire) ou logique (radio) est réalisée. Ce boîtier de télécommande spécifique permet donc à l'utilisateur du dispositif 1 de connaître à distance toutes les données programmées dans le dispositif 1.

Le dispositif de renvoi 1 étant branché sur une ligne téléphonique 2.i par la prise 3.i, le témoin lumineux 28 indique le bon fonctionnement du dispositif, le circuit de détection de sonnerie 18.1 permet d'informer le calculateur 20 qu'un appel téléphonique est présent sur cette ligne i. Après respect des règles des systèmes de réponse automatique, il y a prise de la ligne PTT numéro i au moyen de l'interface de ligne 5.i, indication de l'état de cette ligne i sur le témoin lumineux 29.i et émission de l'annonce vocale Vi correspondant à cette ligne i et se trouvant dans la mémoire 15. Chaque circuit d'interface de ligne 5.i peut comporter un détecteur d'impulsions de taxation (non représenté) afin de calculer le coût des communications téléphoniques. Chaque annonce Vi est constituée d'un texte audible de quelques secondes du type "Etant absent temporairement, nous vous demandons de rappeler plus tard ou de laisser un message après la tonalité", en fonction des possibilités et de la programmation du dispositif en tant que répondeur simple ou répondeur-enregistreur. Cette programmation avait été faite auparavant sur le clavier d'introduction de données 25 avec contrôle sur l'afficheur 24 et stockée dans la mémoire non volatile 22.

Si un usager se trouve à proximité du dispositif 1, il peut entendre la conversation au moyen du haut-parleur 11 relié sur le circuit basse-fréquence 9 lui-même relié à la liaison basse-fréquence 8 et au bus de données 21. Il peut à tout moment interrompre cette communication en saisissant le combiné 30 lui-même relié sur le circuit basse-fréquence 9, ou bien en appuyant sur la touche ad hoc du clavier 25 pour activer la fonction mains-libre en utilisant le microphone 10 et le haut-parleur 11 reliés sur le circuit basse-fréquence 9.

Le fonctionnement en répondeur simple ou répondeur-enregistreur décrit ci-dessus présente peu d'avantages par rapport à un répondeur classique ; toutefois, si le demandeur qui est à l'origine de l'appel téléphonique sur la ligne 2.i compose sur son poste téléphonique, ou à partir d'un boîtier de télécommande 33, un code secret et personnel identique à celui qui se trouve en mémoire 22, le dispositif de renvoi d'appels téléphoniques universel changera de mode de fonctionnement pour accepter une nouvelle programmation de la part de ce demandeur. L'introduction du code secret et personnel dans le dispositif 1 avait été faite auparavant sur le clavier d'introduction de donnés 25 avec contrôle sur l'afficheur 24 et stocké dans la mémoire non volatile 22. Le demandeur relié sur la ligne téléphonique 2.i est alors guidé par différents guides vocaux ou tonalités émis à partir de la mémoire 15 et compose sur son poste téléphonique, ou à partir du boîtier de télécommande 33, des chiffres qui sont détectés par le récepteur 17 et interprétés par le calculateur 20, afin de décider du nouveau mode de fonctionnement du dispositif 1 et en particulier de décider le renvoi de tous les appels téléphoniques de cette ligne 2.1 à partir de telle heure jusqu'à telle heure vers tel numéro de téléphone. La programmation est faite sous le contrôle du calculateur 20 et, après validation par l'appelant, ces données sont mémorisées dans la mémoire non volatile 22 en tant que nouvelles caractéristiques de fonctionnement de la ligne 2.i. Dans le cas d'utilisation d'un boîtier de télécommande spécifique 33, l'utilisateur peut également être guidé par un affichage alphanumérique. Une variante permet de programmer en un seul appel téléphonique une suite d'horaires de début et de fin de renvoi vers des numéros de téléphone différents pour cette même ligne téléphonique 2.i. Si le demandeur raccroche pendant cette phase de programmation, il y a détection de ce raccrochage par l'interface de la ligne 5.i et raccrochage avec libération de la ligne PTT 2.i sous contrôle du calculateur 20. A la fin de la programmation, il y a confirmation des données introduites par émission sous contrôle du calculateur 20 et en utilisant des guides vocaux ou tonalités issus de la mémoire 15 des différents chiffres correspondant aux heures de début et de fin de renvoi ainsi qu'aux numéros de renvoi, à travers le circuit de synthèse vocale 12 ou à travers le circuit de numérotation à fréquences vocales 17 à partir de la mémoire des données programmées 22. Dans le cas d'utilisation d'un boitier de télécommande spécifique 33, l'utilisateur peut également être guidé par un affichage alphanumérique. La ligne PTT 2.i est alors raccrochée sous contrôle du calculateur 20.

La programmation des données permettant les renvois des appels téléphoniques de telle heure à telle heure vers tels numéros de téléphone pour la ligne 2.i peut également être faite directement sur le dispositif de renvoi d'appels téléphoniques universel 1 en utilisant le clavier 25 et l'afficheur 24 sous contrôle du calculateur 20.

Une variante permet de programmer des renvois d'appels de manière répétitive comme par exemple tous les lundis de telle heure à telle heure, puis tel autre jour ou série de jours pendant telle durée. Cette programmation peut être réalisée aussi bien directement sur le dispositif de renvoi d'appels téléphoniques universel 1 en utilisant le clavier 25 et l'afficheur 24 sous contrôle du calculateur 20 ou à distance lors d'un appel téléphonique.

L'imprimante extérieure au dispositif de renvoi d'appels téléphoniques universel raccordée au connecteur 26 permet sous contrôle du calculateur 20 d'imprimer toutes les données programmées dans la mémoire 22 pour cette ligne 2.i.

A la détection de l'heure de début de renvoi par le calculateur 20 à partir du circuit horodateur 27 et par comparaison des données programmées dans la mémoire 22, le dispositif de renvoi d'appels téléphoniques universel décidera, sous contrôle du calculateur 20, de renvoyer tous les appels téléphoniques arrivant sur cette ligne 2.i vers le numéro d'appel programmé.

Si l'appareil ne comporte qu'une seule ligne de raccordement 2.1, le programme du dispositif de renvoi d'appels téléphoniques universel décidera alors de faire appel au service de renvoi d'appels offert par le central PTT public de rattachement. Pour cela, le calculateur 20 à travers l'interface de ligne 5.1 prendra la ligne PTT 2.1 pour effectuer un appel téléphonique départ et numérotera le code public de la fonction de renvoi d'appels sur la ligne PTT, sous contrôle du calculateur 20 par l'intermédiaire du numéroteur multifréquences 16, suivi du numéro de téléphone vers lequel les renvois d'appels doivent être réalisés. Ce numéro de téléphone stocké dans la mémoire 22 étant émis sur la ligne PTT, sous contrôle du calculateur 20 par l'intermédiaire du numéroteur multifréquences 16. Après programmation du renvoi d'appels au niveau du central de rattachement, le calculateur 20 raccroche la ligne PTT 2.1. A partir de cet instant, plus aucun appel téléphonique ne parviendra sur cette ligne PTT 2.1 puisque tous les appels téléphoniques qui auraient dû arriver sur le dispositif 1 sont directement renvoyés par le central PTT de rattachement vers le numéro programmé. Par contre, lorsque le calculateur 20 constatera une égalité entre l'horodate courante en provenance du circuit d'horloge 27 et une horodate de fin de renvoi de la mémoire 22, il décidera de supprimer le renvoi d'appels qui avait été programmé dans le central de rattachement PTT. Pour cela, à travers l'interface de ligne 5.1, le calculateur 20 prendra la ligne PTT 2.1 pour effectuer un appel téléphonique départ et numérotera le code public de l'exploitation suppression de renvoi d'appels sur la ligne PTT sous contrôle du calculateur 20 par l'intermédiaire du numéroteur multifréquences 16, puis raccrochera la ligne 2.1. A partir de cet instant, le dispositif de renvoi d'appels téléphoniques universel 1 peut, soit effectuer un autre renvoi comme décrit ci-avant s'il y a correspondance entre une horodate de début de renvoi et l'horodate courante, soit répondre aux appels téléphoniques arrivant de l'extérieur en tant que répondeur-simple ou répondeur-enregistreur en fonction de sa programmation.

Si le dispositif de renvoi d'appels téléphoniques universel comporte plus d'une ligne téléphonique, le calculateur 20 pourra décider de renvoyer les appels téléphoniques de la ligne 2.i comme s'il ne comportait qu'une seule ligne, dans le cas où le central PTT de rattachement offre cette fonctionnalité de renvoi et que le numéro de renvoi est accepté par le central PTT, c'est-à-dire qu'il n'est pas de type international ou autre numéro interdit. L'analyse de cette possibilité est faite par le calculateur 20 à partir des paramètres de configuration qui avaient été introduits lors de la mise en service du dispositif de renvoi d'appels téléphoniques universel. Dans le cas contraire, c'est-à-dire lorsque le central PTT de rattachement n'offre pas la fonctionnalité de renvoi d'appels ou ne permet pas la programmation du renvoi pour ce numéro de téléphone, le calculateur 20 devra lui-même effectuer les renvois. Pour cela, lors d'un appel téléphonique sur la ligne 2.i le dispositif de renvoi 1 étant branché sur une ligne téléphonique 2.i par la prise 3.i, le circuit de détection de sonnerie 18.1 permet d'informer le calculteur 20 qu'un appel téléphonique est présent sur cette ligne i. Après respect des règles des systèmes de réponse automatique, il y a prise de la ligne PTT numéro i au moyen de l'interface de ligne 5.i et émission vers l'appelant d'un guide vocal ou d'une tonalité de patience se trouvant dans la mémoire 15. Ce guide vocal est constitué d'un texte audible de quelques secondes du type "Veuillez ne pas quitter, nous recherchons votre correspondant". Le calculateur 20 à travers l'interface de ligne 5.j prendra la ligne PTT 2.j pour effectuer un appel téléphonique départ et numérotera le numéro de téléphone de renvoi d'appel. Ce numéro de téléphone correspondant au numéro de renvoi des appels téléphoniques arrivant sur la ligne 2.i, stocké dans la mémoire 22 est émis sur la ligne PTT 2.j sous contrôle du calculateur 20 par l'intermédiaire du numéroteur multifréquences 16, ou directement par l'intermédiaire de l'interface de ligne 5.j pour une numérotation par impulsions si le central PTT de rattachement n'accepte pas la numérotation multifréquences. A la fin de cette numérotation, le calculateur 20 met en relation la ligne arrivée 2.i et la ligne départ 2.j au moyen du réseau de connexion 7. Le demandeur relié sur la ligne 2.i peut écouter alors directement la tonalité de retour d'appel de la ligne 2.j et sera mis en communication avec le demandé dès réponse de celui-ci. S'il y a raccrochage du demandeur sur la ligne 2.i, ce raccrochage est détecté à travers le circuit d'interface 5.i par le calculateur 20 qui décide alors de libérer les lignes 2.j et 2.i. Cette libération de la ligne 2.j peut également être effectuée directement par le calculateur 20 si le numéro demandé sur la ligne 2.j ne répond pas avant un temps programmé auparavant dans la mémoire 22, dans ce cas la ligne 2.i sera également libérée par le calculateur 20 à travers le circuit d'interface de ligne 5.i. Après réponse de la ligne 2.j, le calculateur 20 contrôle en permanence le raccrochage des lignes 2.i et 2.j à travers les circuits d'interface de ligne 5.i et 5.j et libérera les deux lignes 2.i et 2.j si l'une des deux lignes raccroche ou si une durée de communication préprogrammée dans la mémoire 22 est dépassée ou encore si le calculateur 20 constate à travers le circuit d'analyse de la voix 14 qu'il n'y a plus aucune activité vocale sur les deux lignes 2.i et 2.j.

Une variante permet de n'accepter la fonction de renvoi de la ligne 2.i vers tel numéro de téléphone si et seulement si le demandeur à l'origine de l'appel compose sur son poste téléphonique, ou à partir d'un boîtier de télécommande 33, un code secret et personnel identique à celui qui se trouve en mémoire 22 et correspondant à l'autorisation d'effectuer le renvoi pour cette ligne 2.i ; le dispositif de renvoi d'appels téléphoniques universel accepte alors d'effectuer le renvoi comme décrit ci-avant, pour uniquement les appelants qui connaissent et composent ce code secret.

Un autre avantage offert par le dispositif de renvoi d'appels téléphoniques universel est la possibilité d'en modifier à distance les renvois d'appels déjà programmés. En effet, s'il est possible de modifier à tout moment les programmations des renvois d'appels stockés dans la mémoire 22 à partir du clavier 25 du dispositif 1 sous contrôle du calculateur 20, même dans le cas où le dispositif 1 ne possède qu'une seule ligne 2.1, cette modification des renvois d'appels n'est pas possible à distance tant que le dispositif 1 n'a pas annulé ou supprimé le renvoi des appels dans le central PTT de rattachement. Par contre, si le dispositif de renvoi d'appels téléphoniques universel 1 possède plus d'une ligne téléphonique 2.i, le demandeur connaissant l'un des codes secrets et personnels du dispositif 1 peut lors d'un appel sur une ligne 2.j non renvoyée frapper le code secret après réponse automatique de cette ligne 2.j par le dispositif 1 à travers l'interface de ligne 5.j, et modifier ou effectuer la programmation de commande de renvoi d'appels téléphoniques pour la ligne 2.i même si celle-ci est renvoyée au niveau du central de rattachement PTT. Pour cela, le demandeur qui est à l'origine de l'appel sur la ligne 2.j compose sur son poste téléphonique, ou à partir d'un boitier de télécommande 33, un code secret et personnel identique à celui qui se trouve en mémoire 22, le dispositif de renvoi d'appels téléphoniques universel changera de mode de fonctionnement pour accepter une nouvelle programmation de la part de ce demandeur. L'introduction du code secret et personnel avait été faite auparavant sur le clavier d'introduction de données 25 avec contrôle sur l'afficheur 24, et stockée dans la mémoire non volatile 22. Si le renvoi des appels de la ligne 2.i n'est pas faite dans 1 central PTT de rattachement mais doit être effectué par le dispositif 1, le demandeur peut directement appeler la ligne 2.i renvoyée et composer sur son poste téléphonique, ou à partir d'un boîtier de télécommande 33, le code secret et personnel identique à celui qui se trouve en mémoire 22 pendant la phase d'émission sous contrôle du calculateur 20 de l'annonce du type "Veuillez ne pas quitter, nous recherchons votre correspondant". Le dispositif 1 n'effectuera donc pas le renvoi programmé pour cette ligne 2.i mais passera en phase de programmation. Le demandeur est alors guidé par différents guides vocaux ou tonalités émis à partir de la mémoire 15, et compose sur son poste téléphonique, ou à partir du boîtier de télécommande 33, des chiffres qui sont détectés par le récepteur 17 et interprétés par le calculateur 20 afin de décider du nouveau mode de fonctionnement du dispositif et en particulier de décider le renvoi de tous les appels téléphoniques à partir de telle heure jusqu'à telle heure vers tel numéro de téléphone pour la ligne 2.i. La programmation est faite sous le contrôle du calculateur 20 et, après validation par l'appelant, ces données sont mémorisées dans la mémoire non volatile 22. Une variante permet de programmer en un seul appel téléphonique une suite de dates et d'horaires de début et de fin de renvoi vers des numéros de téléphone différents pour les n lignes 2.1 à 2.n.

La programmation des données permettant les renvois des appels téléphoniques des n lignes 2.1 à 2.n de telle heure à telle heure vers tels numéros de téléphone peut également être faite directement sur le dispositif de renvoi d'appels téléphoniques universel 1 en utilisant le clavier 25 et l'afficheur 24 sous contrôle du calculateur 20. Chaque ligne 2.1 à 2.n peut posséder un code secret différent ou non, permettant ainsi à plusieurs abonnés différents d'utiliser le même dispositif de renvoi d'appels téléphoniques universel tout en différenciant l'ensemble des lignes arrivées et départs.

L'imprimante extérieure au dispositif de renvoi d'appels téléphoniques universel raccordée au connecteur 26 permet sous contrôle du calculateur 20 d'imprimer toutes les données programmées dans la mémoire 22 pour les n lignes 2.1 à 2.n. L'imprimante extérieure permet également au fil de l'eau ou sur commande d'imprimer tous les renvois effectués par le dispositif en indiquant les informations nécessaires comme le jour, l'heure, la ligne arrivée, la ligne départ, le numéro composé et la durée ou le coût de l'appel. Toutes les données programmées peuvent également être visualisées ou non sur l'afficheur 24 du dispositif de renvoi d'appels téléphoniques universel. Cet affichage est conditionné par l'utilisation ou non d'un code secret ou d'une touche spécifique du clavier 25 en fonction de la programmation du dispositif de renvoi d'appels téléphoniques universel.

De façon à simplifier l'accès à la programmation du dispositif 1, une variante permet de spécialiser au moins une ligne 2.k pour les appels téléphoniques réservés à la programmation afin d'assurer une accessibilité totale du dispositif de renvoi d'appels téléphoniques universel pour des phases de programmation à distance. D'une manière générale, une annonce vocale spécifique V.k sera diffusée à l'appelant et le numéro d'appel PTT de cette ligne 2.k ne sera pas publié dans un annuaire.

Une variante permet, lorsque le demandeur qui est à l'origine de l'appel téléphonique sur la ligne 2.i compose sur son poste téléphonique, ou à partir d'un boîtier de télécommande 33, un code secret et personnel identique à celui qui se trouve en mémoire 22 suivi d'un code d'exploitation autre que la programmation ou la modification des renvois d'appels, d'indiquer au dispositif de renvoi d'appels téléphoniques universel de changer de mode de fonctionnement pour utiliser une autre ligne téléphonique 2.j en départ pour cette communication uniquement. Dans le cas où la ligne 2.i est renvoyée, à la détection de ce code d'exploitation d'utilisation d'une ligne en départ, le calculateur 20 décide de ne pas effectuer le renvoi programmé pour cette ligne 2.i et cesse donc les opérations en cours en raccrochant si nécessaire la ligne 2.j, et passe en mode de transfert temporaire de ligne pour cette communication uniquement. Le demandeur relié sur la ligne téléphonique 2.i est alors guidé par différents guides vocaux ou tonalités émis à partir de la mémoire 15 et compose sur son poste téléphonique, ou à partir du boîtier de télécommande 33, des chiffres qui sont détectés par le récepteur 17 et interprétés par le calculateur 20, afin d'indiquer le numéro de téléphone qu'il désire appeler à partir du dispositif de renvoi d'appels téléphoniques universel au travers du réseau de connexion 7. L'avantage apporté par cette exploitation est de faire facturer au demandeur une communication locale donc peu coûteuse et de faire facturer à la société propriétaire du dispositif de renvoi d'appels téléphonique universel la communication longue distance ou internationale. Dans le cas d'utilisation d'un boîtier de télécommande spécifique 33, l'utilisateur peut également être guidé par un affichage alphanumérique sur ce boîtier de télécommande.

## Revendications

**1 -** Dispositif de renvoi d'appels téléphoniques universel comportant de 1 à n lignes PTT de raccordement (2.1 à 2.n), chaque ligne étant reliée à un circuit d'interface de ligne classique (5.1 à 5.n), chaque circuit d'interface de ligne étant relié à un circuit de détection de sonnerie d'appels téléphoniques (18.1 à 18.n) lui-même relié d'une part par une liaison basse fréquence (35.1 à 35.n) à un réseau de connexion (7) comportant au minimum n entrées et n sorties et d'autre part à un calculateur (20), ce réseau de connexion est également relié par une liaison basse-fréquence (8) à un circuit amplificateur basse-fréquence classique (9) et à une mémoire de stockage (15) des messages vocaux, les circuits d'interface analogique-numérique (5.1 à 5.n, 7, 9, 15 et 18.1 à 18.n) sont reliés à un bus de données (21) lui-même relié à un afficheur alphanumérique (24), à un clavier d'introduction de données (25) et au calculateur numérique (20), caractérisé par le fait qu'il comporte, relié audit bus de données, une mémoire non volatile (22) de stockage des différents numéros, dates, heures et durées des renvois d'appels pour chacune des n lignes (2.1 à 2.n), un émetteur de signaux multifréquences (16), un récepteur-détecteur de signaux multifréquences (17) et un circuit horodateur (27).

**2 -** Dispositif de renvoi d'appels téléphoniques selon la revendication 1, caractérisé par le fait que ladite liaison basse-fréquence et ledit bus de données sont reliés à un circuit de compression et d'analyse de la voix (14).

**3 -** Dispositif de renvoi d'appels téléphoniques selon l'une quelconque des revendications 1 à 2, caractérisé par le fait que ladite liaison basse-fréquence et ledit bus de données sont reliés à un circuit de synthèse vocale (12).

**4 -** Dispositif de renvoi d'appels téléphoniques selon l'une quelconque des revendications 1 à 3, caractérisé par le fait que ledit bus de données est relié à une embase de connecteur (26) qui permet de relier une imprimante extérieure.

**5 -** Dispositif de renvoi d'appels téléphoniques selon l'une quelconque des revendications 1 à 4, caractérisé par le fait que ledit bus de données est relié à un circuit de liaison (31) pour un boitier (33) de télécommande extérieur et spécifique soit par une liaison filaire (34), soit par une liaison radio ou infrarouge, ledit boitier (33) de télécommande extérieur est mis à jour en permanence par le calculateur (20) et permet donc à l'utilisateur du dispositif de connaître à distance toutes les données programmées dans le dispositif.

**6 -** Dispositif de renvoi d'appels téléphoniques selon l'une quelconque des revendications 1 à 5, caractérisé par le fait que ledit circuit horodateur (27) comporte un circuit de synchronisation de date et d'heure.

**7 -** Dispositif de renvoi d'appels téléphoniques selon l'une quelconque des revendications 1 à 6, caractérisé par le fait que ledit circuit basse-fréquence (9) est relié à un microphone (10) et à un haut-parleur (11).

**8 -** Dispositif de renvoi d'appels téléphoniques selon l'une quelconque des revendications 1 à 7, caractérisé par le fait que ledit circuit basse-fréquence (9) est relié à un combiné téléphonique (30).

**9 -** Dispositif de renvoi d'appels téléphoniques selon l'une quelconque des revendications 1 à 8, caractérisé par le fait que lesdits interfaces de ligne (5.1 à 5.n) sont reliés à n paires de fils (19.1 à 19.n) pour le raccordement de n postes téléphoniques externes (32.1 à 32.n).

**10 -** Dispositif de renvoi d'appels téléphoniques selon l'une quelconque des revendications 1 à 9, caractérisé par le fait que lesdits circuits de détection de sonnerie (18.1 à 18.n) sont reliés chacun à un témoin (29.1 à 29.n) d'état d'occupation de chaque ligne (2.1 à 2.n).
